# NEUE EUROPÄISCHE PATENTSCHRIFT

(11) **EP 1 576 017 B2**
(45) Veröffentlichungstag und Bekanntmachung des Hinweises auf die Entscheidung über den Einspruch: **10.08.2016**
(45) Hinweis auf die Patenterteilung: 05.10.2011
(21) Anmeldenummer: 03780036.4
(22) Anmeldetag: 24.11.2003
(51) Int. Cl.: C09J 11/04, C09J 133/08, C09J 7/02, C08L 33/00, C08F 20/12, C09D 133/02, C08K 3/34

(54) **TRANSPARENTE ACRYLATHAFTKLEBEMASSE MIT EINEM FÜLLSTOFF**
TRANSPARENT ACRYLATE ADHESIVE MASS COMPRISING A FILLER
MASSE COLLANTE D'ACRYLATE TRANSPARENTE COMPRENANT UNE CHARGE

(30) Priorität: 19.12.2002 DE 10259460
(43) Veröffentlichungstag der Anmeldung: 21.09.2005
(73) Patentinhaber: tesa SE, 22848 Norderstedt (DE)
(72) Erfinder: HUSEMANN, Marc, 22559 Hamburg (DE); ZÖLLNER, Stephan, 22043 Hamburg (DE)
(74) Vertreter: Stubbe, Andreas
(86) Internationale Anmeldenummer: PCT/EP2003/013166
(87) Internationale Veröffentlichungsnummer: WO 2004/056881

(56) Entgegenhaltungen:
- EP-A- 0 359 430
- EP-A- 1 081 163
- WO-A-03/057773
- US-A- 4 710 536
- US-A- 5 910 522
- US-B1- 6 416 838
- US-B1- 6 417 244
- O. PRUCKER ET AL.: 'Mechanism of Radical Polymerizations Initiated by Azo Compounds Covalently Boundto the Surface of Spherical Particles' MACROMOLECULES Bd. 31, 1998, Seiten 602 - 613
- O. PRUCKER ET AL.: 'Synthesis of Poly(styrene) Monolayers Attached to High Surface Area Silica Gels through Self-Assembled Monolayers of Azo Initiators' MACROMOLECULES Bd. 31, 1998, Seiten 592 - 601
- Product data sheet Aerosil® R972

## Beschreibung

Die Erfindung betrifft eine transparente Acrylathaftklebemasse mit einem Füllstoff und ein Verfahren zur Herstellung der Acrylathaftklebemasse sowie eine Verwendung der Acrylhaftklebemasse.

Doppelseitige mit Haftklebemassen beschichtete Haftklebebänder werden zunehmend zur Verbundverklebung eingesetzt. Da in vielen Fällen eine langzeitige Verklebung auch In einem relativ großen Temperaturbereich gewährleistet sein muss, werden dort meistens Acrylathaftklebemassen eingesetzt. Neben der sehr guten Temperaturstabilität besitzen diese Acrylathaftklebemassen auch noch weitere Vorteile, wie z. B. eine sehr geringe Alterung sowie Witterung unter UV-Licht und Sauerstoff-haltiger Atmosphäre: Sehr weiche Acrylathaftklebemassen werden sehr häufig mit Füllstoffen abgemischt, um die Schneidbarkeit des Acrylathaftklebebandes zu gewahrleisten. Dies gilt besonders für automatische Dispenseranwendungen. Zumeist werden Fasern (Glasfasern) eingesetzt, die einen versteifenden Effekt besitzen.

Durch ökonomische und ökologische Überlegungen besteht zur Zeit der Trend, Haftklebebänder im Hotmeltverfahren herzustellen, da in diesem Prozess Lösemittel weitgehend ausgeschlossen werden können. Weiterhin wird die Produktionszeit durch schnellere Beschichtungsgeschwindigkeiten verkürzt.

In diesem Prozess wird die Einarbeitung von Fasern sehr erschwert, da die Fasern im Hotmelt Agglomerate bilden oder im Extruder Prozess durch die Scherung zerstört werden.

Daher muss auf alternative Systeme zurückgegriffen werden, wie z. B. konventionelle Füllstoffe, wie Silicate.

Diese Füllstoffe weisen zwar - bei entsprechender Menge - eine kohäsionsteigernde Wirkung auf, aber führen zu einer Trübung der Acrylathaftklebemasse.

Die EP 1 094 098 A zeigt ein Klebeband. das aus einer Folie auf Basis von Polyolefinen und einer Klebeschicht besteht. Diese Klebeschicht enthält ein Acrylatpolymer und kolloidales Siliziumdioxid.

Die DE 100 63 157 A offenbart einen Klebstoff, der aus einem Tackifier, mindestens einem Monomer und Nanopartikeln auf der Basis von Siliziumdioxid besteht Diese Nanopartikeln werden in der Form einer Dispersion mit verschiedenen Acrylmonomeren in einem Lösungsmittel eingesetzt.

Es besteht somit ein Bedarf an einem Füllstoff, der sich in der Acrylathaftklebemasse transparent verhält, aber die für Füllstoffe charakteristischen Eigenschaften aufweist.

Aufgabe der vorliegenden Verbindung ist es daher transparente Acrylathaftklebebänder herzustellen, die eine deutlich verbesserte Kohäsion sowie Schneidbarkeit besitzen.

Die Aufgabe wird durch eine transparente Acrylathaftklebemasse, die ein Polyacrylat und Silicat- und/oder Kieselgel-Partikel enthält, gelöst, wobei die Silicat- und/oder Kieselgel-Partikel eine Größe von maximal 50 nm aufweisen, wobei die Silicat- und/oder Kieselgel-Partikel mit einem radikalischen Initiator funktionalisiert und mit einer chemisch gebundenen Polyacrylatschicht beschichtet sind Durch den Zusatz dieser Füllstoffe wird die Kohäsion der Haftklebemasse gesteigert. Zudem verbessert sich die Schneidbarkeit der Acrytathaftklebebänder.

Die Zugabe von Silicaten als Füllstoff kann zu einer Trübung der Acrylathaftklebemasse führen, um diesen Effekt zu vermeiden werden sehr kleine Silicat- und/oder Kieselgel-Partikel in die Acrylathaftklebemasse eingebracht. In einer bevorzugten Ausführungsform der Erfindung weisen die Silicat- und/oder Kieselgel-Partikel eine Größe von maximal 10 bis 30 nm auf. Bei dieser Partikelgröße kommt es zu keiner Trübung der Acrylathaftklebemasse.

Ein weiterer Aspekt, der zu einer Trübung der Acrylathaftklebemasse führen kann ist die Menge der Füllstoffe, die eingebracht werden. Die Silicat- und/oder Kieselgel-Partikel sind vorzugsweise mit einem Gewichtsanteil von 0,5 bis 25 bezogen auf das reine Silicat/Kieselgel enthalten.

Auch die Acrylathaftklebemasse selbst muss eine klare Substanz sein. In einer bevorzugten Ausführungsform der Erfindung ist das Polyacrylat erhältlich aus einer Comonomerzusammensetzung aus
a) Acrylsäure und Methacrylsäure-Derivaten, der allgemeinen Formel (I) mit einem Anteil von 70 bis 100 Gewichtsprozent,

   CH₂=C(R₁)(COOR₂) (I)

   wobei R₁ = H oder CH₃ ist und R₂ = H oder eine Alkylkette mit 2 bis 20 C-Atomen, wie Butyl-, Pentyl-, Hexyl-, Heptyl-, Octyl-, Isooctyl-, 2-Methylheptyl-, 2-Ethylhexyl-, Nonyl-, Decyl-, Dodecyl-, Lauryl-, oder Stearyl(meth)acrylat oder (Meth)acrylsäure sind sowie
b) Vinylverbindungen mit funktionellen Gruppen mit einem Anteil von 0 bis 35 Gewichtsprozent.
Bevorzugt ist die Vinylverbindung ein Maleinsäureanhydrid, ein Styrol, eine Sty-rolverbindung, ein Vinylacetat, ein (Meth)acrylamid, ein N-substituiertes (Meth)acrylamid, eine β-Acryloyloxypropionsäure, eine Vinylessigsäure, eine Fumarsäure, eine Crotonsäure, eine Aconitsäure, eine Dimethylacrylsäure, eine Trichloracrylsäure, eine Itaconsäure, ein Hydroxyalkyl(meth)acrylat, ein aminogruppenhaltiges (Meth)acrylat, ein hydroxygruppenhaltiges (Meth)acrylat, ein 2-Hydroxyethyl(rneth)acrylat, ein 2-Hydroxypropyl(meth)acrylat, und/oder ein 4-Hydroxybutyl(meth)acrylat.

Weiter bevorzugt ist die Vinylverbindung ein mit Doppelbindung funktionalisierter Fotoinitiator, wobei der Anteil des Fotoinitiators von 0 bis 30 Gewichtsprozent betragen kann. Durch die Verwendung eines Fotoinitiators wird die Polymerisation erleichtert.

Die Zusammensetzung der Monomere wird so gewählt, dass die resultierenden Acrylathaftklebemassen entsprechend D. Satas [Handbook of Pressure Sensitive Adhesive Technology, 1989, Verlag VAN NOSTRAND REINHOLD, New York] haftklebende Eigenschaften besitzen.

Als Füllstoff werden Silicat- und/oder Kieselgel-Partikel in die Acrylathaftklebemasse eingebracht. Die Silicat- und/oder Kieselgel-Partikel sind vorzugsweise mit einem radikalischen Initiator funktionalisiert. Die Funktionalisierung führt zu einer geringeren Aggregierung der Partikel und somit einer geringeren Anzahl von Konglomeraten, die wiederum die Transparenz der Haftklebemasse reduzieren würde.

Erfindungsgemäß sind die Silicat- und/oder Kieselgel-Partikel mit einer chemisch gebundenen Polyacrylatschicht umgeben. Die Silicat- und/oder Kieselgel-Partikel werden vor der Zugabe zu der übrigen Acrylathaftklebemasse mit einem radikalischen Initiator funktionalisiert, und in einem weiteren Schritt wird chemisch die Polymerschicht auf die Silicat- und/oder Kieselgel-Partikel gebunden. Dabei muss es sich nicht um eine vollständige Polymerschicht handeln, sondern die Polymerisation auf der Oberfläche der Silicat- und/oder Kieselgel-Partikel kann in einem frühen Stadium abgebrochen werden, bei dem sich erst kleine Büschel von Polymersträngen auf der Oberfläche gebildet haben, die noch nicht zu einer vollständigen Oberflächenbedeckung führen.

Das Polyacrylat der Acrylathaftklebemasse und der Partikelbeschichtung sind vorzugsweise im Wesentlichen identisch. Dadurch kann eine optimale Einbettung der Silicat- und/oder Kieselgel-Partikel erzielt werden. Es besteht aber auch die Möglichkeit durch Variation der Partikelbeschichtung die Eigenschaften der Silicat - und/oder Kieselgel-Partikel zu verändern, was sich auf die Scherfestigkeit der Acrylathaftklebemasse auswirkt.

Des Weiteren wird die Aufgabe der Erfindung durch ein Verfahren gelöst, bei dem die Acrylate und Comonomere in Gegenwart wenigstens eines organischen Lösungsmittels oder in Substanz polymerisiert werden, wobei die mit Initiator funktionalisierten Silicat-und/oder Kieselgel-Partikel zur Polymerisation zugemischt werden- In einer sehr bevorzugten Auslegung wird für die Polymerisation der Acrylate und Comonomere das identische Initiatorsystem eingesetzt, welches auch chemisch auf der Oberfläche der Silicat- und/oder Kieselgel-Partikel gebunden ist.

Bei der Polymerisation handelt es sich in einer bevorzugten Ausführung um eine freie radikalische Polymerisation. Diese Polymerisation kann in Gegenwart eines organischen Lösungsmittels oder in Substanz durchgeführt werden. Es wird dabei so wenig Lösungsmittel wie möglich eingesetzt. Die Polymerisationszeit beträgt - je nach Umsatz und Temperatur - zwischen 6 und 48 h.

Bei der Lösungsmittelpolymerisation werden als Lösemittel Ester gesättigter Car-bonsäuren (wie Ethylacetat), aliphatische Kohlenwasserstoffe (wie n-Hexan oder n-Heptan), Ketone (wie Aceton oder Methylethylketon), Siedegrenzbenzin oder Gemische dieser Lösungsmittel verwendet. Als Polymerisationsinitiatoren werden übliche radikalbildende Verbindungen wie beispielsweise Peroxide und Azoverbindungen eingesetzt. Auch Initiatorgemische können verwendet werden. Bei der Polymerisation können auch Thiole als weitere Regler zur Molekulargewichtssenkung und Verringerung der Polydispersität eingesetzt werden. Als sogenannte Polymerisationsregler können z. B. Alkohole und Ether verwendet werden.

Durch Zugabe von Silicat- und/oder Kieselgel-Partikeln wird die Schneidbarkeit der Acrylathaftklebemasse verbessert. Zu große oder zu viele Silicat- und/oder Kieselgel-Partikel führen jedoch zu einer Trübung der Acrylathaftklebemasse.

Deshalb werden in einer bevorzugten Ausführungsform der Erfindung Silicat- und/oder Kieselgel-Partikel mit einer maximalen Größe von 50 nm, insbesondere von 10 bis 30 nm, zugemischt. Weiter bevorzugt werden Silicat- und/oder Kieselgel-Partikel mit einem Gewichtsanteil von 0,5 bis 25 bezogen auf das reine Silicat/Kieselgel zugemischt.

Erfindungsgemäß werden die Silicat- und/oder Kieselgel-Partikel in einem vorgeschalteten Prozess mit einem radikalischen Initiator funktionalisiert. Dies erleichtert die Kieselgeloberflächen-induzierte Polymerisation durch die das Polyacrylat chemisch an den Füllstoff gebunden und nach dem Vernetzungsschritt in die Acrylathaftklebemasse eingebaut wird, so dass keine Entmischungsphänomene mehr auftreten können.

Zur Initiator-Funktionalisierung können alle dem Fachmann bekannten radikalischen Initiatoren an die Silicat- und/oder Kieselgel-Partikel chemisch gebunden werden. Der radikalische Initiator kann mit einer Siliylethoxy-, Silan- oder Silylchlorid-Verbindung in optionaler Gegenwart eines Katalysators oder einer basischen Substanz mit den Silicat-und/oder Kieselgel-Partikeln umgesetzt werden. Als radikalische Initiatoren eignen sich z. B. Peroxide, Nitroxidverbindungen, sekundäre und tertiäre Bromide (im Allgemeinen alle ATRP Initiatoren [Matyjaszewski et al. Macromolecules 1995, 28, 1721 und Journal of American Society 1995, 117, 5614]) und Azoverbindungen.

Die Silicat- und/oder Kieselgel-Partikel werden vorzugsweise vor oder nach der Polymerisation zugemischt. Dazu werden die mit einem radikatischen Initiator funktionalisierten Silicat- und/oder Kieselgel-Partikel entweder zu den Monomeren gegeben und dann die Polymersiation gestartet oder die polymerbeschichtete Silicat-und/oder Kieselgel-Partikel werden erst nach der Polymerisation in die Acrylathaftklebemasse eingebracht. Dazu werden die Silicat- und/ oder Kieselgel-Partikel vorzugsweise nach oben beschriebenen Prozess mit einer Polymerschicht versehen (chemisch gebunden), wobei das Polyacrylat der Acrylathaftklebemasse und der Partikelbeschichtung im Wesentlichen identisch sind. Indem die Silicat- und/oder Kieselgel-Partikel eine Oberfläche aus dem gleichen Material besitzen, wie die übrige Acrylathattklebemasse wird auch auf diese Welse eine Sedimentation der Silicat- und/oder Kieselgel-Partikel verhindert oder zumindest verlangsamt.

Neben den konventionellen und käuflich erhältlichen Kieselgel, wie z. B. Degussa Aerosil 20C™, können auch synthetisch geschichtete Silicate, wie z. B., SOMASIF™ ME 100 der Fa. CO-OP Ltd., Japan eingesetzt werden. Nanoshärische Kieselgele werden nach einer Vorschrift von Philipse [Journal Colloid Interface Science 1989, 128, 121-136] hergestellt oder Buining [Journal Colloid Interface Science 1996, 179, 318-321] eingesetzt. Nanosphärische Kieselgele sind aber auch von DuPont kommerziell unter den Markennamen Ludox^{®} und Synton™ mit Partikelgrößen von 5 bis 40 nm erhältlich. Die Partikelgröße des Kieselgels sollte maximal 200 nm betragen und sollte denn weiter auf den gewünschten Bereich gemahlen werden.

Zur Herstellung der Acrylathaftklebemassen können die erfindungsgemäßen Polyacrylat/Polyacrylat-beschich-teten Kieselgel-Partikel Mischungen in üblicher Weise modifiziert werden. Beispielsweise können klebrigmachende Harze, wie Terpen-, Terpenphenol-, C5-, C9-, C5/C9-Kohlenwasste-stoff-, Pinen-, Inden- oder Kolophoniumharze auch in Kombination miteinander zugesetzt werden. Weiterhin können auch Weichmacher und Alterungsschutzmittel als Zusätze verwendet werden. Des Weiteren können Vernetzer und dem Fachmann bekannte Promotoren zur UV-Vernetzung belgemischt werden. Multifunktionelle Acrylate als Vernetzer und Polymernetzwerke sind besonders geeignet. In der Regel können alle dem Fachmann bekannten Vernetzer für Polyracrylate hinzugesetzt werden.

Die Polymerisation zur Herstellung der Acrylathaftklebemasse kann in Polymerisationsreaktoren durchgeführt werden, die im Allgemeinen mit einem Rührer, mehreren Zulaufgefäßen, Rückflusskühler, Heizung und Kühlung versehen sind und für das Arbeiten unter N₂-Atmosphäre und Überdruck ausgerüstet sind.

Die Vernetzung der erfindungsgemäßen Acrylathaftklebemasse erfolgt bevorzugt durch kurzzeitige UV-Be-strahlung im Bereich von 200 bis 400 nm mit handelsüblichen Quecksilber-Hochdruck oder Mitteldrucklampen mit einer Leistung von z, B. 80 bis 160 W/cm erfolgen. Es kann angebracht sein, die Strahlerleistung der Bahngeschwindigkeit anzupassen oder die Bahn bei Langsamfahrt teilweise abzuschatten, um ihre thermische Belastung zu verringem. Die Bestrahlungszeit richtet sich rach Bauart und Leistung der jeweiligen Strahler.

In einer weitern bevorzugten Ausführungsform der Erfindung erfolgt die Vernetzung der Acrylathaftklebemasse durch ionisierende Strahlung (z. B. Elektronenstrahlung) oder durch eine thermische Vernetzung.

Nach der Polymerisation in Lösemittel kann das Polymerisationsmedium unter vermindertem Druck entfernt werden, wobei dieser Vorgang bei erhöhterTemperatur, beispielsweise im Bereich vor 80 bis 150 °C durchgefürt wird. Die Acrylathaftklebemasse kann dann in lösemittelfreiem Zustand, insbesondere als Schmelzhaftkleber, eingesetzt werden. In manchen Fällen ist es auch von Vorteil, die erfindungsgemäße Acrylathaftklebemasse in Substanz herzu-stellen.

Ferner wird die Erfindung durch eine Verwendung der Acrylathaftklebemasse zur Herstellung von Acrylathaftklebebändem gelöst.

Transparente Acrylathaftklebebänder mit Füllstoffen können im Hotmelprozess hergestellt werden und besitzen durch die Füllstoffe eine deutlich verbesserte Kohäsion sowie Schneidbarkelt. Als Füllstoffe dienen die oben beschriebene Silicat- und/oder Kiselget-Partikel.

Zur Herstellung eines Acylathaftklebebandes kann die Acrylathaftklebemasse in üblicher Weise durch Streichen, Spritzen, Walzen, Rakeln, Gießen, oder Extrudieren, gegebenenfalls bei erhöhter Temperatur- meist im Temperaturbereich von 20 bis 150 °C - auf übliche Träger aufgebracht werden, beispielsweise auf Papier, Pappe, Holz, Metale und Kunststofffolien, z. B. aus weichgemachtem PVC, Polyethylen, Polyamide, Polyethylenglykolterephthalat oder Polypropylen. Soweit dabei Lösemittel verwendet werden, können diese von den Überzügen leicht, gegebenenfalls bei Raumtemperatur oder wenig erhöhten Temperaturen, im Allgemeinen bei Temperaturen von 20 - 150 °C, insbesondere von 50 - 100 °C, abgedampft werden, wobei in üblicher Weise Heizstrahler oder Warmluftwälzvorrichtungen eingesetzt werden.

Zum blending im Polyacrylat-Hotmelt lassen sich alle dem Fachmannbekannten Mischvorrichtungen einsetzen, wobei insbesondere Doppelschneckenextruder eingesetzt werden.

Wenn die polymerbeschichten Silicat- und/oder Kieselgel-Partikel nicht in situ während der Polymerisation hergestellt werden, so können sie im Hotmeltprozess vor der Beschichtung an jeder beliebigen Stelle zwischen Ende der Polymerisation und Beschichtung vor der Beschichtungsdüse zugegeben werden.

Die Haftklebeelgenschaften nach der Vemetzung werden mit den im Experimentellen Teil beschriebenen Testmethoden ermittelt.

Für die Prüfung werden Follen aus Polyethylenglycolterephthalat mit einem Masseauftrag von 50 g/m² beschichtet.

Sofern für die klebtechnische Ausprüfung gelöste Polymerisate eingesetzt werden, werden die Lösemittel 10 Minuten bei 120 °C im Trockenschrank abgedampft.

Im Folgenden wird die Erfindung anhang von Beispielen näher erläutert.

Mengenangaben, Anteile und Prozentanteile sind auf die Gesamtmenge der Monomeren bezogen.

Die Kieselgel-Partikel wurden von der Fa. DuPont bezogen. Es wurde die Serie Ludox^{®} mit einer Partikelgröße von 22 nm eingesetzt.

### Herstellung der azofunktionalisierten Silylverbindung:

Die Herstellung des Allylesters 3 erfolgt, wie im Reaktionsschema (II) dargestellt, nach Prucker und Rühe aus der Carbonsäure 1 über das Zwischenprodukt 2 (Macromolecules 1998, 31, 602-613),

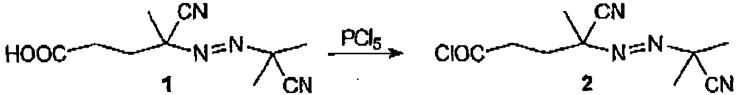

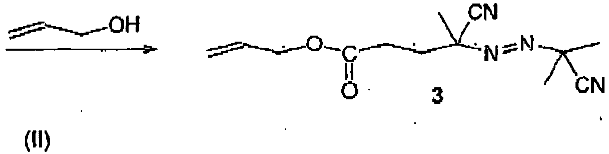

Spektrum von 3; ¹H-NMR (CDCl₃, δ in ppm): 5,8 - 5,9 (m, 1H); 5,2 - 5,4 (m, 2 H); 4,6 (d, 2H); 2,3 - 2,5 (m, 4 H); 1,69, 1,71, 1,73(s, 3 H jedes Signal).

Die Hydrosilyllerung des Alfyesters 3 zum Chlorsilan 4 erfolgt, wie im Reaktionsschema (III) dargestellt, nach Husemann und Hawker et al. (Macromolecules 1999, 32, 1424-1431).

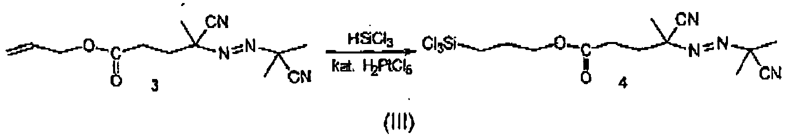

### Immobiliesierung des Chlorsilanes 4 zu den Kielselgel-Fartikeln:

Die Umsetzung der Kieselgel-Partlkel erfolgt nach Husernann und Hawker et al. (Macromolecules 1999, 32, 1424-1431).

### Testmethoden

### Scherfestigkeit (Test A):

Ein 13 mm breiter Streifen des Klebebandes wurde, nachdem auf Aluminiumfolle umkaschiert wurde, auf eine glatte Stahloberfläche, die dreimal mit Aceton und einmal mit Isopropanol gereinigt wurde, aufgebracht. Die Auftragsfläche betrug 20 x 13 mm (Länge x Breite). Anschließend wurde mit 2 kg Anpressdruck das Klebeband viermal auf den Stahlträger gedrückt. Bei Raumtemperatur wurde ein 1 kg Gewicht an dem Klebeband befestigt. Die gemessenen Scherstandzeiten sind in Minuten angegeben und entsprechen dem Mittelwert aus drei Messungen.

### 180° Klebkrafttest (Test B):

Ein 20 mm breiter Streifen einer auf Polyester gecceteten Acrylathaftklebemasse wurde auf Stahl Platten aufgebracht. Der Acrylathaftklebestreifen wurde zweimal mit einem 2 kg Gewicht auf das Bubstrat aufgedrückt. Das Klebeband wurde anschließend sofort mit 300 mm/min und im 180° Winkel vom Substrat abgezogen. Die Stahl Platten wurden zweimal mit Aceton und einmal mit Isopropanol gewaschen. Die Massergebnisse sind in N/cm angegeben und sind gemittelt aus drei Messungen. Alle Messungen wurden bei Raumtemperatur unter klimatisierten Bedingungen durchgeführt.

### Polymerisation der Referenzbeispiele

### Beispiel 1:

Ein für radikalische Polymerisationen konventioneller 250 ml-Glasreaktor wurde mit 0,8 g Acrylsäure (AS), 0,4 g Maleinsäureanhydrid (MSA), 19,4 g n-Butylacrylat (n-BuA), 19,4 g 2-Ethylhexylacrylat (2-EHA), und 30,0 g Aceton/ Isopropanol (97:3) befüllt. Nach 45 Minuten Durchleiter mit Stickstoffgas unter Rühren wurde der Reaktor auf 58 °C hochgehelzt und 0,02 g Azoisobutyronitril (AIBN) hinzugegeben. Anschließend wurde das äußere Heizbad auf 75 °C erwärmt und die Reaktion konstant bei dieser Außentemperatur durchgeführt. Nach 1 h Reaktionszelt wurde wiederum 0,02 g AIBN hinzugegeben. Nach 3 und 6 h wurde mit jeweils 15,0 g Aceton/Isopropanol Gemisch verdünnt. Die Reaktion wurde nach 48 h Reaktionszeit abgebrochen und auf Raumtemperatur abgefühlt. Die Acrylathaftklebemasse wurden denn aus Lösung auf eine PolyethylenterephthalatFolie (PET-Folie /23 µm, mit Fluko-Primer) mit 50 g/m² beschichtet und getrocknet. Die Acrylathaftklebemasse wurde mit 30 kGy ESH vernetzt und nach den Testmethoden A und B ausgetestet.

### Beispiel 2:

Es wurde analog Beispiel 1 vorgegangen. Zur Polymerisation wurden 0,8 g Acrylsäure, 6,0 g Methylacrylat (MA) und 33,2 g 2-Ethylhexylacrylateingesetz. Die Lösungsmittel- und initiatormengen wurden beibehalten. Zur Härtung wurde des reine Polyacrylat auf dem Polyester-Träger mit 30 kGy Dosisbehandelt. Zur Analyse wurden die Testmethoden A und B durchgeführt.

### Beispiel 3:

Es wurde analog Beispiel 7 vorgegangen. Zur Polymerisation wurden 4.0 g Acrylsäure und 36,0 g 2-Ethylhe-xylacrylat eingesetzt. Die Lösungsmittel- und initiatormengen wurden beibehalten. Zur Härtung wurde das reine Polyacrylat auf dem Polyester-Träger mit 30 kGy Dosis behandelt. Zur Analyse wurden die Testmethoden A und B durch-geführt.

### Beispiel 4:

Es wurde analog Beispiel 1 vorgegangen. Zur Polymerisation wurden 0,8 g Acrylsäure, 34,8 g 2-Ethylhexylacrylat, 4.0 g Methylacrylat und 0,4 g Maleinsäureanhydid eingesetzt. Die Lösungsmittel- und Initiatormengen wurden beibehalten. Das Polymer wurde mit 0,5 Gewichtsanteilen eines difunktionellen Urethanacrylates (Genomer 4312™, Fa. Rahn) und 25 Gewichtsanteilen eines hydrierten Kohlenwasserstoffharzes (Norsolene M1080™, Fa. Crey Valley), und 5 Gewichtsanteilen Staybelite^{®} 3-E (Fa. Hercules) abgemischt, getrocknet und mit 50 g/m² auf dem Polyester-Träger ausgestrichen. Das Muster wurde mit 50 kGy. Dosis ES-gehärtet. Zur Analyse wurden die Testmethoden A und B durchgeführt.

### Beispiel 5:

Ein für radikailsche Polymerisationen konventioneller 250 ml-Glasreaktor wurde mit 0,8 g Acrylsäure, 0,4 g Maleinsäureanhydrid, 19,4 g n-Butylacrylat, 19,4 g 2-Ethylhexylacrylat, 2,0 g Azoinitiator-funktionalislertes Kieselgel und 30,0 g Aceton/Isopropanol (97:3) befüllt. Nach 45 Minuten Durchleiten mit Stickstoffgas unter Rühren wurde der Reaktor auf 58 °C hochgeheizt und 0,02 g AIBN hirzugegeben. Anschließend wurde das äußere Helzbad auf 75 °C erwärmt und die Reaktion konstant bei dieser Außentemperatur durchgeführt. Nach 1 h Reaktionszeit wurde wiederum 0,02 g AlBN hinzugegeben. Nach 3 und 6 h wurde mit jeweils 15,0 g Aceton/Isopropanol Gemisch verdünnt. Die Reaktion wurde nach 48 h Reaktionszeit abgebrochen und auf Raumtemperatur abgekühlt. Die Acrylathaftklebemasse wurden dann aus Lösung auf eine PET-Folie (23 µm, mit Fluko-Primer) mit 50 g/m² beschichtet und getrocknet. Die Acrylathaftklebemasse wurde mit 30 kGy ESH vernetzt und nach den Testmethoden A und B ausgetestet.

### Beispiel 6:

Es wurde analog Beispiel 5 vorgegangen. Zur Polymerisation wurden 0,8 g Acrylsäure, 6,0 g Methylacrylat, 2,0 g Azoinitiator-funktionalisiertes Kieselgel und 33,2 g 2-Ethylhexylacrylat eingesetzt. Die Lösungsmittel- und initiatormengen wurden beibehalten. Zur Härtung wurde das reine Polyacrylat auf dem Polyester-Träger mit 30 kGy Dosis behandelt. Zur Analyse wurden die Testmethoden A und B durchgeführt.

### Beispiel 7:

Es wurde analog Beispiel 5 vorgegangen. Zur Polymerisation wurden 0.8 g Acrylsäure, 6,0 g Methylacrylat, 4,0 g Azoinitiator-funktionalisiertes Kieselgel und 33.2 g 2-Ethylhexylacrylat eingesetzt. Die Lösungsmittel- und initiatormengen wurden beibehalten. Zur Härtung wurde das reine Polyacrylat auf dem Polyester-Träger mit 30 kGy Dosis behandelt. Zur Analyse wurden die Testmethoden A und B durchgeführt.

### Beispiel 8:

Es wurde analog Beispiel 5 vorgegangen. Zur Polymerisation wurden 4,0 g Acrylsäure, 2,0 g Azoinitiatorfunktionalisiertes Kieselgel und 36,0 g 2-Ethylhexylacrylat eingesetzt. Die Lösungsmittel- und initiatormengen wurden beibehalten. Zur Härtung wurde das reine Polyacrylat auf dem Polyester-Träger mit 30 kGy Dosis behandelt. Zur Analyse wurden die Testmethoden A und B durchgeführt.

### Beispiel 9:

Es wurde analog Beispiel 1 vorgegangen. Zur Polymerisation wurden 0,6 g crylsäure, 34,8 g 2-Ethylhexylacrylat, 4,0 g Methylacrylat, 5,0 g Azoinitiator-funktionalisiertes Kieselgel und 0,4 g Maleinsäureanhydrid eingesetzt. Die Lösungsmittel- und initiatormengen wurden beibehalten. Das Polymer wurde mit 0,5 Gewichtsantellen eines difunktionellen Urethanecrylates (Genomer 4312™, Fa. Rahn) und 25 Gewichtsanteilen eines hydrierten Kohlenwasserstoffharzes (Norsolene M1080™_{,} Fa. Cray Valley), und 5 Gewichtsanteilen Staybelite® 3-E (Fa. Hercules) abgemischt, getrocknet und mit 50 g/m² auf dem Polyester-Träger ausgestrichen. Das Muster wurde mit 50 kGy Dosis ES-gehärtet. Zur Analyse wurden die Textmethoden A und B durchgeführt.

### Beispiel 10:

Ein Acrylathaftklebeband aus Beispiel 7 wurde nach der ES-Vernetzung bei 100 °C für 7 Tage gelagert. Anschließend wurde die Oberfläche untersucht und mit dem Zustand vor der thermischen Lagerung verglichen.

In der Tabelle 1 sind die in den Referenzen (Beispiel 1 - 4) eingesetzten Comonomerzusammensetzungen aufgeführt.

| Tabelle 1 | | | | | |
|---|---|---|---|---|---|
| Beispiel | AS[%] | 2-EHA[%] | n-BuA[%] | MA[%] | MSA[%] |
| 1 | 2 | 48,6 | 48,6 | 0 | 1 |
| 2 | 2 | 83 | 0 | 15 | 0 |
| 3 | 10 | 90 | 0 | 0 | 0 |
| 4 | 2 | 87 | 0 | 10 | 1 |

Das Harz in Beispiel 4 wurde zusätzlich mit 0,5 Gewichtsanteilen Genomer 4312™, 25 Gewichtsanteilen Norsolene M 1080™ und 5 Gewichtsanteilen Staybellte^{®} Ester 3 E abgemischt. Die Ergebnisse der klebtechnischen Ausprüfung der Referenzmuster sind in Tabelle 2 zuzammengefasst:

| Tabelle 2 | | | |
|---|---|---|---|
| Beispiel | ESH Dosis | KK-Stah Sofort [N/cm] | SSZ RT 10 N [min] |
| 1 | 30 kGy | 4,6 | 7250 |
| 2 | 30 kGy | 4,9 | 2720 |
| 3 | 20 kGy | 3,8 | 10000+ |
| 4 | 50 kGy | 6,2 | 250 |

In Tabelle 3 sind die Ergebnisse der Kieselgel-modifizierten Acrylathaftklebemassen dargestellt.

| **Tabelle 3** | | | |
|---|---|---|---|
| Beispiel | ESH Dosis | KK-Stahl Sofort[N/cm] | SSZ RT 10 N [min] |
| 5 | 30 kGy | 4,4 | +10000 |
| 6 | 30 kGy | 4,8 | +10000 |
| 7 | 30 kGy | 4,4 | +10000 |
| 8 | 20 kGy | 3,6 | +10000 |
| 9 | 50 kGy | 6,0 | 1150 |

Der Vergleich der klebtechnischen Eigenschaften zeigt, dass durch die Kieselgel-Modifizierung die Kohäsion deutlich gesteigert wird. Zudem sinkt die Klebkraft nur marginal. Beispiel 8 zeigt ebenfalls, dass eine bereits sehr gute Kohäsion durch die Kieselgel-Modifizierung nicht zerstört wird. Schneidversuche des Produkts aus Beispiel 9 verdeutlichen, dass die Kieselgelmodifizierung einen positiven Einfluss auf die Schneidbarkert besitzt. Schneidversuche haben ergeben, dass die erfinderische Klebmasse nach längeren Standzeiten nicht mehr so stark auf dem Messer aufzieht und beim Schneiden die Anzahl der Ausrupfungen vermindert wird, so dass die optische Qualität des Haftklebebandes deutlich ansteigt.

In Beispiel 10 wurde gezeigt, dass die Silicalgel-Partikel durch die chemische Bindung der Polymere an der Oberfläche während der ESH-Vernetzung in die Acrylathaftklebemasse eingebaut werden. Dadurch wird die Tendenz der Entmischung eliminiert, so dass die Qualität des Acrylathaftklebebandes auch bei längere Lagerung gleich bleibt. Andere Füllerzusätze sind meistens nicht chemisch in der Acrylathaftklebamasse eingebunden und besitzen daher die Tendenz zur Entmischung an der Oberfläche.

## Patentansprüche

1. Transparente Acrylathaftklebemasse mit einem Füllstoff, **dadurch gekennzeichnet, dass**
die Acrylathaftklebemasse ein Polyacrylat und Silicat- und/oder Kieselgel-Partikel enthält, wobei die Silicat- und/oder Kieselgel-Partikel eine Größe von maximal 50 nm aufweisen, **dadurch gekennzeichnet, dass**
die Silicat- und/oder Kieselgel-Partikel mit einem radikalischen initiator funktionalisiert und mit einer chemisch gebundenen Polyacrylatschicht beschichtet sind.

2. Acrylathaftklebemasse nach Anspruch 1, **dadurch gekennzeichnet, dass**
die Silicat- und/oder Kieselgel-Partikel eine Größe von maximal 10 bis 30 nm aufweisen.

3. Acrylathaftkfebemasse nach einem der Ansprüche 1 oder 2, **dadurch gekennzeichnet, dass**
die Silicat- und/oder Kieselgel-Partikel mit einem Gewichtsanteil von 0,5 bis 25 bezogen auf das reine Silicat/Kieselgel enthalten sind.

4. Acrylathaftklebemasse nach einem der Ansprüche 1 bis 3, **dadurch gekennzeichnet, dass**
das Polyacrylat erhältlich ist aus einer Comonomerzusammensetzung aus
a) Acrylsäure und Methacrylsäure-Derivaten, der allgemeinen Formel (I) mit einem Anteil von 70 bis 100 Gewichtsprozent,
CH₂=C(R₁)(COOR₂) (I)
wobei R, = H oder CH₃ ist und R₂ = H oder eine Alkylkette mit 2 bis 20 C-Atomen, wie Butyl-, Pentyl-, Hexyl-, Heptyl-, Octyl-, Isooctyl-, 2-Methylheptyl-, 2-Ethylhexyl-, Nonyl-, Decyl-, Dodecyl-, Lauryl-, oder Stearyl(meth)acrylat oder (Meth)acrylsäure sind sowie
b) Vinylverbindungen mit funktionellen Gruppen mit einem Anteil von 0 bis 30 Gewichtsprozent, wobei die Vinylverbindungen mit Doppelbindung funktionalisierter Fotoinitiatoren sind.

5. Acrylathaftklebemasse nach einem der Ansprüche 1 bis 4, **dadurch gekennzeichnet, dass**
das Polyacrylat der Haftklebemasse und der Partikelbeschichtung im Wesentlichen identisch sind.

6. Verfahren zur Herstellung einer Acrylathaftklebemasse nach einem der vorhergehenden Ansprüche, **dadurch gekennzeichnet, dass** die Acrylate und Comonomere in Gegenwart wenigstens eines organischen Lösungsmittels oder in Substanz polymerisiert werden, wobei die Silicat- und/oder Kieselgel-Partikel zugemischt werden,
und die Silicat- und/oder Kieselgel-Partikel in einem vorgeschalteten Prozess mit einem radikalischen initiator funktionalisiert werden.

7. Verfahren nach Anspruch 6, **dadurch gekennzeichnet, dass**
die Silicat- und/oder Kieselgel-Partikel während oder nach der Polymerisation zugemischt werden.

8. Verfahren nach einem der Ansprüche 6 oder 7, **dadurch gekennzeichnet, dass**
die Silicat- und/oder Kieselgel-Partikel mit einem Polymer beschichtet werden, wobei
das Polyacrylat der Acrylathaftklebemasse und der Partikelbeschichtung im Wesentlichen identisch sind.

9. Verfahren nach einem der Anspruch 6 bis 8, **dadurch gekennzeichnet, dass**
die Vernetzung der Acrylathaftklebemasse durch UV-Bestrahlung im Bereich von 200 bis 400 nm erfolgt.

10. Verfahren nach einem der Ansprüche 6 bis 9, **dadurch gekennzeichnet, dass**
die Vernetzung der Acrylathaftklebemasse durch ionisierende Strahlung oder durch eine thermische Vernetzung erfolgt.

11. Verwendung der Acrylalthaftklebemasse nach einem der Ansprüche 1 bis 5 zur Herstellung von Acrylathaftklebebändern.

## Claims

1. Transparent acrylate pressure-sensitive adhesive comprising a filler, **characterized in that**
the acrylate pressure-sensitive adhesive comprises a polyacrylate and particles of silicate and/or of silica gel, the particles of silicate and/or of silica gel having a size of not more than 50 nm, **characterized in that**
the particles of silicate and/or of silica gel have been functionalized with a free-radical initiator and coated with a chemically bonded polyacrylate coat.

2. Acrylate pressure-sensitive adhesive according to Claim 1, **characterized in that**
the particles of silicate and/or of silica gel have a size of not more than 10 to 30 nm.

3. Acrylate pressure-sensitive adhesive according to one of Claims 1 and 2, **characterized in that**
the particles of silicate and/or of silica gel are present with a weight fraction of 0.5 to 25 relative to the unfilled silicate/silica gel.

4. Acrylate pressure-sensitive adhesive according to one of Claims 1 to 3, **characterized in that**
the polyacrylate is obtainable from a comonomer composition comprising
a) acrylic acid and methacrylic acid derivatives of the general formula (I), with a fraction of 70 to 100 percent by weight,
CH₂=C(R₁)(COOR₂) (I)
where R₁ = H or CH₃ and R₂ = H or an alkyl chain having 2 to 20 carbon atoms, such as butyl, pentyl, hexyl, heptyl, octyl, isooctyl, 2-methylheptyl, 2-ethylhexyl, nonyl, decyl, dodecyl, lauryl or stearyl (meth)acrylate or (meth)acrylic acid, and
b) vinyl compounds comprising functional groups, with a fraction of 0 to 30 percent by weight, the vinyl compounds being double-bond-functionalized photoinitiators.

5. Acrylate pressure-sensitive adhesive according to one of Claims 1 to 4, **characterized in that**
the polyacrylate of the pressure-sensitive adhesive and of the particle coating are substantially identical.

6. Process for preparing an acrylate pressure-sensitive adhesive according to one of the preceding claims, **characterized in that** the acrylates and comonomers are polymerized in the presence of at least one organic solvent or in bulk, the particles of silicate and/or of silica gel being mixed in,
and the particles of silicate and/or of silica gel are functionalized with a free-radical initiator in an upstream operation.

7. Process according to Claim 6, **characterized in that**
the particles of silicate and/or of silica gel are mixed in during or after the polymerization.

8. Process according to one of Claims 6 and 7, **characterized in that**
the particles of silicate and/or of silica gel are coated with a polymer, the polyacrylate of the acrylate pressure-sensitive adhesive and of the particle coating being substantially identical.

9. Process according to one of Claims 6 to 8, **characterized in that**
the acrylate pressure-sensitive adhesive is crosslinked by UV irradiation in the range from 200 to 400 nm.

10. Process according to one of Claims 6 to 9, **characterized in that**
the acrylate pressure-sensitive adhesive is crosslinked by ionizing radiation or by thermal crosslinking.

11. Use of the acrylate pressure-sensitive adhesive according to one of Claims 1 to 5 for producing acrylate pressure-sensitive adhesive tapes.

## Revendications

1. Masse autoadhésive transparente à base d'acrylate, présentant une charge, **caractérisée en ce que** la masse autoadhésive à base d'acrylate contient un polyacrylate et des particules de silicate et/ou de gel silicique, les particules de silicate et/ou de gel silicique présentant une grosseur d'au maximum 50 nm, **caractérisée en ce que** les particules de silicate et/ou de gel silicique sont fonctionnalisées par un initiateur radicalaire et revêtues d'une couche de polyacrylate liée chimiquement.

2. Masse autoadhésive à base d'acrylate selon la revendication 1, **caractérisée en ce que** les particules de silicate et/ou de gel silicique présentent une grosseur maximale de 10 à 30 nm.

3. Masse autoadhésive à base d'acrylate selon l'une quelconque des revendications 1 ou 2, **caractérisée en ce que** les particules de silicate et/ou de gel silique sont contenues avec une proportion pondérale de 0,5 à 25 par rapport au silicate/gel silicique pur.

4. Masse autoadhésive à base d'acrylate selon l'une quelconque des revendications 1 à 3, **caractérisée en ce que** le polyacrylate peut être obtenu à partir d'une composition de comonomères constituée par
a) de l'acide acrylique et des dérivés de l'acide méthacrylique de formule générale (I) en une proportion de 70 à 100% en poids
CH₂=C(R₁)(COOR₂) (I)
où R₁ = H ou CH₃ et R₂ = H ou une chaîne alkyle comprenant 2 à 20 atomes de carbone, tels que le (méth)acrylate de butyle, de pentyle, d'hexyle, d'heptyle, d'octyle, d'isooctyle, de 2-méthylheptyle, de 2-éthylhexyle, de nonyle, de décyle, de dodécyle, de lauryle, ou de stéaryle ou l'acide (méth)acrylique ainsi que par
b) des composés de vinyle présentant des groupes fonctionnels en une proportion de 0 à 30% en poids, les composés de vinyle étant des photo-initiateurs fonctionnalisés par une double liaison.

5. Masse autoadhésive à base d'acrylate selon l'une quelconque des revendications 1 à 4, **caractérisée en ce que** le polyacrylate de la masse autoadhésive et le revêtement des particules sont essentiellement identiques.

6. Procédé pour la préparation d'une masse autoadhésive à base d'acrylate selon l'une quelconque des revendications précédentes, **caractérisé en ce que** les acrylates et les comonomères sont polymérisés en présence d'au moins un solvant organique ou en masse, les particules de silicate et/ou de gel silicique y étant ajoutées en mélangeant, et les particules de silicate et/ou de gel silicique sont fonctionnalisées dans un procédé disposé en amont par un initiateur radicalaire.

7. Procédé selon la revendication 6, **caractérisé en ce que** les particules de silicate et/ou de gel silicique sont ajoutées en mélangeant pendant ou après la polymérisation.

8. Procédé selon l'une quelconque des revendications 6 ou 7, **caractérisé en ce que** les particules de silicate et/ou de gel silicique sont revêtues d'un polymère, le polyacrylate de la masse autoadhésive à base d'acrylate et le revêtement des particules étant essentiellement identiques.

9. Procédé selon l'une quelconque des revendications 6 à 8, **caractérisé en ce que** la réticulation de la masse autoadhésive à base d'acrylate a lieu par irradiation aux UV dans la plage de 200 à 400 nm.

10. Procédé selon l'une quelconque des revendications 6 à 9, **caractérisé en ce que** la réticulation de la masse autoadhésive à base d'acrylate a lieu par rayonnement ionisant ou par une réticulation thermique.

11. Utilisation de la masse autoadhésive à base d'acrylate selon l'une quelconque des revendications 1 à 5 pour la production de bandes autoadhésives à base d'acrylate.
